Europäisches Patentamt

European Patent Office

Office européen des brevets

(19)

(11) Veröffentlichungsnummer : **0 051 268**
**B1**

(12) **EUROPÄISCHE PATENTSCHRIFT**

(45) Veröffentlichungstag der Patentschrift :
22.01.86

(51) Int. Cl.⁴ : **B 62 D 27/02**, F 16 B   5/06

(21) Anmeldenummer : **81109114.9**

(22) Anmeldetag : **28.10.81**

(54) **Befestigungsrahmen für Bleche od. dgl.**

(30) Priorität : **30.10.80 AT 5338/80**

(43) Veröffentlichungstag der Anmeldung :
**12.05.82 Patentblatt 82/19**

(45) Bekanntmachung des Hinweises auf die Patenterteilung : **22.01.86 Patentblatt 86/04**

(84) Benannte Vertragsstaaten :
**BE CH DE LI NL**

(56) Entgegenhaltungen :
**DE-A- 2 459 364**
**DE-A- 2 829 342**
**DE-C-   878 124**
**DE-U- 1 978 497**
**FR-A- 2 112 754**

(73) Patentinhaber : **Austria Metall Aktiengesellschaft**

**A-5282 Braunau am Inn (AT)**

(72) Erfinder : **Högl, Johann**
**Franz-Schubert-Strasse 13**
**A-5280 Braunau am Inn (AT)**

(74) Vertreter : **Hain, Leonhard, Dipl.-Ing.**
**Tal 18/IV**
**D-8000 München 2 (DE)**

## Beschreibung

Die Erfindung betrifft einen Befestigungsrahmen für Bleche od. dgl., insbesondere für Fahrzeugaufbauten, gemäß dem Oberbegriff des Patentanspruches 1, wie er durch die DE-A-2 829 342 bekannt ist.

Bei einem Wandelement für Fahrzeugaufbauten (DE-A-2 829 342) ist eine Klemmvorrichtung für Bleche bekannt, wobei die einzuklemmenden Bleche an den abgekanteten Enden mittels einer in ein Rahmenprofil eingreifenden Klemmleiste in entsprechend ausgebildeten Ausnehmungen des Rahmenprofiles festgehalten werden. Bei dieser Klemmleiste bilden der Leistensteg und die davon abstehenden Schenkel eine U-Form. Beide Schenkel weisen an ihren Enden Widerhaken für einen Einschnappeingriff in am Rahmenprofil ausgebildete Gegenhaken auf, um damit die Klemmstellung zu sichern. Die eigentlichen Klemmeinrichtungen in Form von V- oder Z-förmigen Rippen sind in Verlängerung des Leistensteges außerhalb der beiden Schenkel ausgebildet. Diese bekannte Klemmvorrichtung ist als Skelettprofil für Wandelemente zum Festhalten von Blechen mit abgekanteten Enden geeignet, wobei jeweils zwei gegenüberliegende Blechenden in eine symmetrisch aufgebaute Klemmvorrichtung eingespannt sind. Zum Festklemmen nur eines Blechendes, das auch nicht vorgeformt bzw. abgekantet ist, ist diese bekannte Klemmvorrichtung jedoch nicht brauchbar. Bei einer anderen Klemmvorrichtung (DE-U-1 978 497) werden zwei benachbarte, abgebogene Ränder von Wandelementen an den Biegerundungen eines U-förmigen Rahmenprofils festgeklemmt. Dazu greift in das Rahmenprofil eine Klemmleiste so ein, daß ihre Seitenwände die Blechenden an das entsprechend geformte Rahmenprofil andrücken. Die Klemmleiste selbst ist mit dem Rahmenprofil verschraubt. Durch eine solche Verschraubung, die in kurzen Abständen angebracht werden muß, ergibt sich ein beträchtlicher zusätzlicher Aufwand an Material und Arbeitszeit.

Der Erfindung liegt daher die Aufgabe zugrunde, einen Befestigungsrahmen für Bleche od. dgl. zu schaffen, der zum Festklemmen eines einzelnen Bleches an seinem nicht vorgeformten Rand mittels einer einfachen Einschnapprastung geeignet ist.

Diese Aufgabe wird an einem Befestigungsrahmen nach dem Oberbegriff des Patentanspruches 1 erfindungsgemäß durch die kennzeichnenden Merkmale dieses Patentanspruches gelöst.

Weitere Merkmale der Erfindung sind in Unteransprüchen beansprucht.

Durch die Ausbildung eines Eindrehriegels und einer Lagerpfanne an einem von der Klemmfläche abgelegenen Schenkel der Klemmleiste ist es möglich, eine Einschnapp- und eine Einschwenkverbindung zwischen Klemmleiste und Rahmenprofil zu schaffen. Die Einschwenkverbindung kann dabei sehr stabil ausgeführt sein, so daß mit der Klemmeinrichtung beim Einschwenken der Klemmleiste auch dicke Bleche umgebogen und an der als Biegerundung ausgebildeten Klemmfläche festgeklemmt werden können. Die Einschnapp-Rastung hat dabei nur die Aufgabe, die Klemmstellung zu sichern. Die von dieser Einschnappverbindung unabhängige Klemmeinrichtung läßt sich andererseits so ausbilden, daß in Klemmstellung auf das Blech ein genügender Anpreßdruck ausgeübt werden kann, um auch ein unter hoher Zugspannung stehendes Blech sicher festzuhalten. Die erfindungsgemäße Klemmvorrichtung ist außerdem einfach und sehr stabil im Aufbau und sie läßt sich ohne Spezialwerkzeuge rasch montieren.

Die Erfindung wird nachfolgend anhand von Ausführungsbeispielen, die auch in der Zeichnung dargestellt sind, näher beschrieben. Es zeigen:

Figur 1   einen Querschnitt durch einen ersten Befestigungsrahmen und

Figur 2   einen gleichen Querschnitt durch einen etwas abgeänderten Befestigungsrahmen.

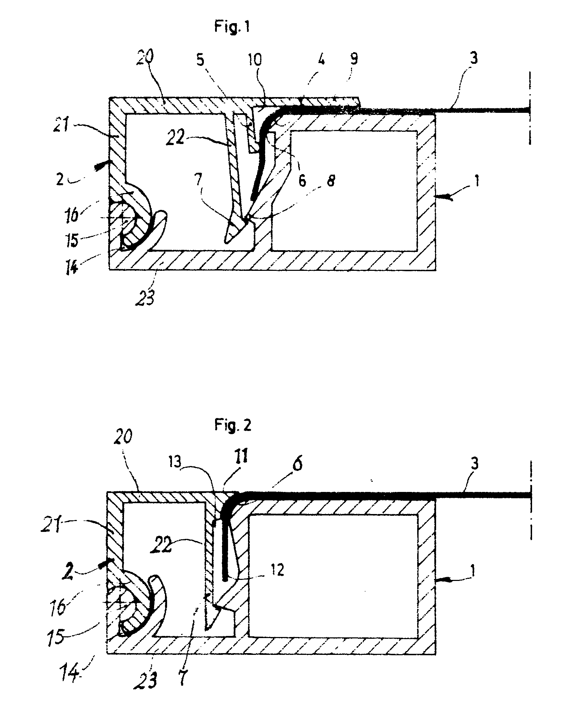

Ein Blechbefestigungsrahmen nach Fig. 1 besteht lediglich aus einer eindrehbaren und hinterhakenden Klemmleiste 2 und einem Rahmenprofil 1, in welches das anzuschließende Blech 3 eingebogen und zugfest angeschlossen wird. Das anzuschließende Blech 3 wird dabei an das Rahmenprofil angelegt und eventuell überstehendes Blech beschnitten, wobei die Schnittkante bis zu 15 mm tolerieren kann. Nach dem Ansetzen und Eindrehen der Klemmleiste 2 ist das Blech 3 straff um eine Biegerundung 4 gebogen und mit einem Klemmschenkel 5 der Klemmleiste hinter eine Klemmkante 6 des Rahmenprofiles 1 gebogen. Der selbsthemmende hinterhakende Schenkel 22 der Klemmleiste 2 hintergreift mit seinem Widerhaken 7 einen Gegenhaken 8 des Rahmenprofiles und drückt somit eine Abdeckleiste 9 an das Blech und das Rahmenprofil. Durch das eingebogene Blech und die hinterhakende Klemmleiste wird ohne zusätzliche Befestigungsmittel, wie Schrauben, Nieten, Schweißen, eine zugfeste und spritzwasserdichte Verbindung erreicht. Bei absolutem Dichtheitserfordernis wird vor dem Zusammenbau am Klemmschenkelfuß in eine Nut 10 der Klemmleiste 2 dauerelastischer Kitt aufgetragen oder ein Dichtungsprofil eingelegt.

Bei der Befestigung des Bleches an einem Befestigungsrahmen nach Fig. 2 wird eine ebene, stufenfreie und glatte Anschlußfläche erreicht. Die Klemmleiste 2 hält das Blech 3 wiederum an der Biegerundung, wodurch der eingebogene Blechschenkel 12 frei absteht und den Rückfederweg des Bleches durch das Einbiegen aufnehmen kann. Dazu ist der Klemmkante 6 des Rahmenprofils 1 eine entsprechend gekrümmte Klemmkehle 11 zugeordnet. Zu seiner Halterung ist die Klemmleiste 2 wiederum mit einem hinterhakenden Schenkel 7 ausgestattet. Wie beim Rahmen gemäß Fig. 1 weist auch dieses Rahmenprofil 1 eine Lagerpfanne 14 mit einem Lagerwulst 15 zur Aufnahme eines an der Klemmleiste 2 ausgebildeten Eindrehriegels 16 auf. Durch Einfügen von Dichtungsmasse in eine Dichtnut 13 wird dieser Blechanschluß absolut dicht.

Dieser Blechanschluß eignet sich besonders für den Einsatz im Fahrzeugbau, und zwar für den Seitenwandanschluß am Heckrahmen von Kastenwagenaufbauten. Es ist aber auch der Einsatz auf anderen Gebieten, wo ein Blechanschluß an Rahmenelementen erforderlich ist, denkbar (z. B. Tore, Fassaden, Zwischenwände u. dgl.).

**Patentansprüche**

1. Befestigungsrahmen für Bleche od. dgl., insbesondere für Fahrzeugaufbauten, mit einem von dem einzuklemmenden Blech (3) überdeckten Rahmenprofil (1) mit einer Klemmfläche (4) für das Blech, einer in das Rahmenprofil eingreifenden Klemmleiste (2) aus einem Leistensteg (20) und davon U-förmig abstehenden Schenkeln (21, 22), von denen der der Klemmfläche (4) benachbarte Schenkel (22) an seinem Ende einen Widerhaken (7) für einen Einschnappeingriff in einen am Rahmenprofil (1) ausgebildeten Gegenhaken (8) aufweist, sowie mit einer in Verlängerung des Leistensteges (20) außerhalb des Schenkels (22) ausgebildeten Klemmeinrichtung (5, 9 bzw. 11) zum Anpressen des Bleches (3) an die Klemmfläche, dadurch gekennzeichnet, daß der von der Klemmfläche (4) abgelegene Schenkel (21) der Klemmleiste (2) mit einem Eindrehriegel (16) in eine Lagerpfanne (14), die an einem Stegfortsatz (23) des Rahmenprofiles (1) ausgebildet ist, einschwenkbar ist.

2. Befestigungsrahmen nach Anspruch 1, dadurch gekennzeichnet, daß die Klemmfläche eine Biegerundung (4) ist und die Klemmeinrichtung von einer das Blech (3) übergreifenden Abdeckleiste (9) und einem diese Biegerundung (4) hintergreifenden Klemmschenkel (5) gebildet ist.

3. Befestigungsrahmen nach Anspruch 1, dadurch gekennzeichnet, daß die Klemmfläche eine Biegerundung (4) und die Klemmeinrichtung eine dieser Biegerundung angepaßte Klemmkelle (11) ist.

4. Befestigungsrahmen nach einem der Ansprüche 1 bis 3, dadurch gekennzeichnet, daß die Klemmleiste (2) an der Klemmeinrichtung eine Nut (10 bzw. 13) zum Einbringen einer Dichtungsmasse aufweist.

**Claims**

1. Fastening frame for plates or the like, especially for vehicle bodies, comprising a frame profile (1) overlapped by the plate (3) which is to be clamped, said frame profile (1) having a clamping surface (4) for the plate (3), a clamping strip (2) engaging in the frame profile and having a strip web (20) and legs (21, 22) starting therefrom and forming a U, the leg (22) adjacent to the clamping surface (4) being provided with a barb (7) at its end for snap engagement in a counterhook (8) formed at the frame profile (1), and a clamping device (5, 9 or 11) formed in extension of the strip web (20) outside the leg (22) to press the plate (3) to the clamping surface, characterized in that a lock truss (16) of the leg (21) distant from the clamping surface (4) of the clamping strip (2) is pivotable into a step bearing (14) which is formed at a web extension (23) of the frame profile (1).

2. Fastening frame according to claim 1, characterized in that the clamping surface is a bending rounding (4) and that the clamping device is formed by a covering strip (9) overlapping the plate (3) and a clamping leg (5) engaging behind this bending rounding (4).

3. Fastening frame according to claim 1, characterized in that the clamping surface is a bending rounding (4) and the clamping device a clamping spoon (11) fitting this bending rounding.

4. Fastening frame according to one of the claims 1 to 3, characterized in that the clamping strip (2) has a groove (10 or 13) at the clamping device for receiving a sealant.

**Revendications**

1. Pince d'ancrage pour plaques de tôle ou analogues, notamment pour carrosseries de véhicules, comportant un profilé en caisson (1), qui est recouvert par la plaque de tôle (3) qu'il s'agit d'ancrer et qui présente une surface de serrage (4) de cette plaque, une équerre de serrage (2) qui est en prise avec ce profilé en caisson et qui est composée d'un dos (20) et de deux ailes (21, 22) qui en partent en formant un U, l'aile (22) la plus rapprochée de la surface de serrage (4) comportant à son extrémité un crochet (7) destiné à venir en prise avec un crochet complémentaire (8) formé sur le profilé (1), ainsi qu'une mâchoire (5, 9 ou 11) qui est formée sur un prolongement du dos (20) au-delà de l'aile (22) et qui est destinée à appliquer la plaque de tôle (3) contre la surface de serrage, pince caractérisée en ce qu'un verrou (16) de l'aile (21) de l'équerre (2) éloignée de la surface de serrage (4) peut être engagé par pivotement dans une crapaudine (14) qui est formée sur un prolongement (23) en forme d'aile du profilé en caisson (1).

2. Pince d'ancrage selon la revendication 1, caractérisée en ce que la surface de serrage est un arrondi de cintrage (4) et la mâchoire est composée d'une barrette de recouvrement (9) appliquée sur la plaque de tôle (3) et d'une aile de serrage (5) qui s'engage sous cet arrondi (4).

3. Pince d'ancrage selon la revendication 1, caractérisée en ce que la surface de serrage est un arrondi de cintrage (4) et la mâchoire est une surface concave (11) complémentaire de cet arrondi.

4. Pince d'ancrage selon l'une des revendications 1 à 3, caractérisée en ce que la mâchoire de l'équerre de serrage (2) présente une gorge (10 ; 13) destinée à loger une matière de joint d'étan-chéité.

0 051 268

Fig. 1

Fig. 2

1